(19) **Europäisches Patentamt / European Patent Office / Office européen des brevets**

(11) **EP 3 915 713 B1**

(12) **EUROPEAN PATENT SPECIFICATION**

(45) Date of publication and mention of the grant of the patent:
**16.10.2024 Bulletin 2024/42**

(21) Application number: **20763549.1**

(22) Date of filing: **26.02.2020**

(51) International Patent Classification (IPC):
**B23K 20/04** (2006.01)   **B23K 20/227** (2006.01)
**B23K 20/24** (2006.01)   **B23K 20/26** (2006.01)
**B23K 26/242** (2014.01)   **B23K 26/32** (2014.01)

(52) Cooperative Patent Classification (CPC):
**B23K 26/242; B23K 20/04; B23K 20/227; B23K 20/24; B23K 20/26; B23K 26/32**

(86) International application number:
**PCT/JP2020/007830**

(87) International publication number:
**WO 2020/175573 (03.09.2020 Gazette 2020/36)**

(54) **ASSEMBLED SLAB, METHOD FOR MANUFACTURING SAME, AND METHOD FOR MANUFACTURING CLAD STEEL MATERIAL**

ZUSAMMENGESETZTE PLATTE, VERFAHREN ZUR HERSTELLUNG DAVON UND VERFAHREN ZUR HERSTELLUNG VON PLATTIERTEM STAHLMATERIAL

BRAME ASSEMBLÉE, SON PROCÉDÉ DE FABRICATION ET PROCÉDÉ DE FABRICATION D'UN MATÉRIAU D'ACIER PLAQUÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.02.2019 JP 2019033947**

(43) Date of publication of application:
**01.12.2021 Bulletin 2021/48**

(73) Proprietor: **JFE Steel Corporation Tokyo 100-0011 (JP)**

(72) Inventors:
 • **OKITA, Yasuaki**
   **Tokyo 100-0011 (JP)**
 • **KITANI, Yasushi**
   **Tokyo 100-0011 (JP)**

(74) Representative: **Haseltine Lake Kempner LLP Bürkleinstrasse 10 80538 München (DE)**

(56) References cited:
 EP-A1- 0 004 063   WO-A1-98/43774
 JP-A- 2016 150 342   JP-A- 2016 150 342
 JP-A- H 035 087   JP-A- H04 305 384
 JP-A- H07 241 685   JP-A- S6 245 485
 JP-A- S6 289 587   JP-A- S6 356 373

 • NO: "ROLLED CLAD PLATES", 30 April 2003 (2003-04-30), XP055676292, Retrieved from the Internet <URL:http://files.engineering.com/download.aspx?folder=37977ece-eb0e-4192-851b-fe885f46f154&file=Rolled_Clad_Plates.pdf> [retrieved on 20200312]

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to a slab assembly including base metal plates and cladding plates stacked one on another for obtaining clad steel plates, to a method for manufacturing the slab assembly, and to a method for manufacturing clad steel plate.

Background Art

A clad steel plate is a steel material obtained by stacking a cladding plate (such as a stainless steel plate or a titanium plate) and a base metal plate that is a plate-shaped plain steel (so-called carbon steel) together and bringing these plates into tight contact with each other. The clad steel plate has an advantage in that, while its cost is lower than the cost when a stainless steel plate or a titanium plate is used alone, the features of the clad steel plate such as corrosion resistance and wear resistance are comparable to those of the stainless steel plate or the titanium plate. Therefore, in recent years, there is a largely increasing demand for clad steel plates from the viewpoint of reducing the material cost of various structures.

One widely used method for manufacturing a clad steel plate includes the following procedure. A base metal plate and a cladding plate are stacked together so as to be in contact with each other, and circumferential portions of their contact surface are welded to form a slab assembly. Then the slab assembly is heated and rolled. This method has advantages in that its dimensional accuracy and productivity are higher than those of a manufacturing method using explosive cladding (so-called explosive bonding).

In view of the above, various techniques for manufacturing a slab assembly including a base metal plate and a cladding plate have been proposed in order to manufacture a clad steel plate smoothly.

For example, Patent Literature 1 discloses a technique for obtaining a clad metal plate by stacking two or more metal plates of the same type or different types to form a stacked metal plate, welding the stacked metal plate using an electron beam in a sealed vacuum atmosphere having a pressure of 15 Pa or less to form a slab assembly, and warm-rolling or hot-rolling the slab assembly. During the welding, while a filler metal is supplied to portions near the surface at which the metal plates are in contact with each other (this surface is hereinafter referred to as a contact surface), the electron beam is applied in a direction parallel to or inclined with respect to the contact surface.

When the technique described in Patent Literature 1 is applied to the production of a clad steel plate, the electron beam is deflected because of the influence of, for example, thermoelectromotive force generated during welding and because of the difference in magnetic properties between the base metal plate and the cladding plate that occurs because the base metal plate (i.e., the steel plate) is a magnetic material. One problem in this case is that the electron beam deviates from target positions on the contact surface and, therefore, a sufficient penetration depth is not obtained. Moreover, when the slab assembly is heated, thermal stress occurs, and flow stress occurs during subsequent rolling. In this case, small penetration depth portions of the contact surface are destroyed, the vacuum between the base metal plate and the cladding plate is broken, and poor bonding between the base metal plate and the cladding plate occurs.

Therefore, it is contemplated to develop a technique for obtaining a sufficient penetration depth on the contact surface between the base metal plate and the cladding plate by applying an electron beam to positions displaced from target positions on the contact surface when the contact surface is welded using the electron beam before a clad steel plate is manufactured. However, the degree of deviation of the electron beam varies depending on the combination of the base metal plate and the cladding plate stacked together to form a slab assembly, and the deviations between the target positions on the contact surface and the irradiation positions of the electron beam vary depending on the combination of the base metal plate and the cladding plate.

Specifically, even when the technique described in Patent Literature 1 is applied to the production of various clad steel plates, it is difficult to manufacture the clad steel plates stably.

Patent Literature 2 discloses a technique for manufacturing a slab assembly by removing foreign substances and stains from the surfaces of base metal plates and cladding plates (this is hereinafter referred to as cleaning), preparing two raw workpieces each including one base metal plate and one cladding plate facing each other with an intermediate metal (such as a metal foil) interposed therebetween, disposing the two raw workpieces such that their cladding plates face each other (i.e., the base metal plates face outward) to form a slab assembly, disposing a spacer made of the same material as the material of the base metal plates around the circumference of the cladding plates to enclose the cladding plates with the base metal plates and the spacer, and performing laser beam welding in a vacuum atmosphere to join the base metal plates and the spacer together.

When the technique described in Patent Literature 2 is applied to the production of clad steel plates, deflection of the laser beam does not occur even when the magnetic properties of the base metal plates (i.e., the steel plates) differ from the magnetic properties of the cladding plates. Therefore, the laser beam can be applied to target positions, and slab assemblies composed of raw workpieces including various combinations of base metal plates and cladding plates stacked one on another can be obtained. However, since the laser beam is focused on a narrow region, welds with narrow and deep shapes are formed. One problem in this case is that the laser beam tends to penetrate through the spacer and reach the cladding plates.

If the laser beam penetrates through the spacer, molten metal spatters may enter the gap between the base metal plate and the intermediate metal behind the spacer and the gap between the intermediate metal and the cladding plate behind the spacer. When such a slab assembly is rolled to manufacture clad steel plates, the base metal plates and the cladding plates are not in sufficiently tight contact with each other, and poor bonding portions are formed.

The penetration of the laser beam through a spacer can be prevented by reducing the power of the laser beam or increasing the speed of welding (i.e., the moving speed of the laser beam). However, since the laser beam is focused on a very limited narrow region, even if the irradiation position deviates only slightly, a sufficient penetration depth may not be obtained on the contact surface between the spacer and the base metal plate. In this case, since flow stress occurs when the slab assembly is rolled, small penetration portions of the contact surface are destroyed, the vacuum in the slab assembly is broken, and poor bonding between the base metal plates and the cladding plates occurs.

The penetration of the laser beam through the spacer can be prevented also by adjusting the focal position of the laser beam to reduce the penetration depth. However, the forward end of a metal weld that is farthest from the outer surface of the spacer (the forward end is hereinafter referred to as a deepest portion) tends to have a bulged pear shape. In this case, a new problem arises in that cracking tends to occur in the central portion of the bulged shape.

Citation List

Patent Literature

PTL 1: Japanese Unexamined Patent Application Publication No. 62-45485
PTL 2: Japanese Unexamined Patent Application Publication No. 2016-150342
JP H07 241685 discloses a slab assembly with welded abutting surfaces, with deepest portions of the metal welds that are not located in the base metal plates.

Summary of Invention

Technical Problem

An object of the present invention is to solve the problems in the conventional techniques and to provide a slab assembly that is composed of raw workpieces each obtained by stacking a base metal plate (i.e., a steel plate) and a cladding plate (the raw workpieces are hereinafter referred to as clad raw workpieces). The slab assembly is rolled to manufacture clad steel plates. With this slab assembly, the clad steel plates can be manufactured efficiently and stably. It is another object to provide a method for manufacturing the slab assembly and a method for manufacturing clad steel plates using the slab assembly.

Solution to Problem

The present inventor has conducted studies on a technique for manufacturing two clad steel plates from two clad raw workpieces efficiently and stably. Specifically, each of the clad raw workpieces is obtained by stacking one base metal plate and one cladding plate one on another. Then the two clad raw workpieces are rolled simultaneously to cause the contact surface of each base metal plate and the contact surface of a corresponding cladding plate to be in sufficiently tight contact with each other. The inventor has found that, by performing the welding for manufacturing the slab assembly from the two clad raw workpieces appropriately, the resulting slab assembly can be smoothly rolled, and the clad steel plates can be manufactured efficiently and stably.

Specifically, with laser beam welding, a deep, long and narrow metal weld is formed. Therefore, the inventor has found that, by controlling the dimensions and angle of the metal weld appropriately, the problems such as poor bonding can be solved.

The present invention is based on the above findings.

Accordingly, the present invention provides a slab assembly which includes: two clad raw workpieces, each clad raw workpiece including one base metal plate having at least one cleaned surface and one cladding plate stacked on the cleaned surface of the base metal plate and whose surface stacked on the cleaned surface of the base metal plate is cleaned, four sides of the cladding plate being shorter than four sides of the base metal plate, the two clad raw workpieces being disposed with the cladding plates thereof facing each other; a release material interposed between the cladding plates; and a spacer disposed along the four sides of the cladding plates, wherein metal welds are formed along abutting surfaces between the spacer and the base metal plates, the metal welds having respective deepest portions located inside the respective base metal plates; each of the abutting surfaces has a portion in which corresponding one of the metal welds forms a joint located in a region extending from a surface of the spacer to a position located at 500 or more and less than 1000 of a thickness $T_5$ of the spacer; and a width W (mm) of each of the metal welds along a side surface of corresponding one of the base metal plates, a length D (mm) of a straight line M connecting a center of the width W of the each of the metal welds and the deepest portion thereof, and an angle A (°) between the straight line M and corresponding one of the abutting surfaces satisfy formulas (1) and (2) described later.

The present invention also provides a method for manufacturing a slab assembly, the method includes: preparing two clad raw workpieces, each clad raw workpiece including one base metal plate having at least one cleaned surface and one cladding plate stacked on the cleaned surface of the base metal plate and whose surface stacked on the cleaned surface of the base metal plate is cleaned, four sides of the cladding plate being shorter than four sides of the base metal plate; disposing the two clad raw workpieces such that the cladding plates thereof face each other; disposing a release material so as to be interposed between the cladding plates; disposing a spacer along four sides of the cladding plates; and performing welding along abutting surfaces between the spacer and the base metal plates, wherein the performing welding is controlled such that: metal welds having respective deepest portions located inside the respective base metal plates are formed; each of the abutting surfaces has a portion in which corresponding one of the metal welds forms a joint located within a region extending from a surface of the spacer to a position located at 500 or more and less than 1000 of a thickness $T_5$ of the spacer; and a width W (mm) of each of the metal welds along a side surface of corresponding one of the base metal plates, a length D (mm) of a straight line M connecting a center of the width W of the each of the metal welds and the deepest portion thereof, and an angle A (°) between the straight line M and corresponding one of the abutting surfaces satisfy formulas (1) and (2) described later.

In the slab assembly manufacturing method of the invention, the welding is performed along the abutting surfaces using a laser beam welding method in a vacuum atmosphere having a pressure of 0.1 kPa or less.

The present invention also provides a method for manufacturing clad steel plates, the method includes: subjecting the slab assembly to warm rolling or hot rolling; removing the spacer; and separating the clad raw workpieces from the release material to obtain two clad steel plates.

$$D/W \geq 5 \quad\quad (1)$$

$$1 \leq A \leq 15 \quad\quad (2)$$

Advantageous Effects of Invention

According to the present invention, clad steel plates can be manufactured efficiently and stably, and the base metal plates and the cladding plates can be brought into sufficiently tight contact with each other, and industrially significant effects can be obtained.

Brief Description of Drawings

[Fig. 1] Fig. 1 is a cross-sectional view schematically showing an example of the slab assembly according to the present invention.
[Fig. 2] Fig. 2 is a cross-sectional view schematically showing a clad raw workpiece included in the slab assembly shown in Fig. 1.
[Fig. 3] Fig. 3 is an enlarged cross-sectional view showing an example of the disposition of a spacer in Fig. 1.
[Fig. 4] Fig. 4 is a cross-sectional view showing an example of welding of an abutting surface in Fig. 1.
Description of Embodiments

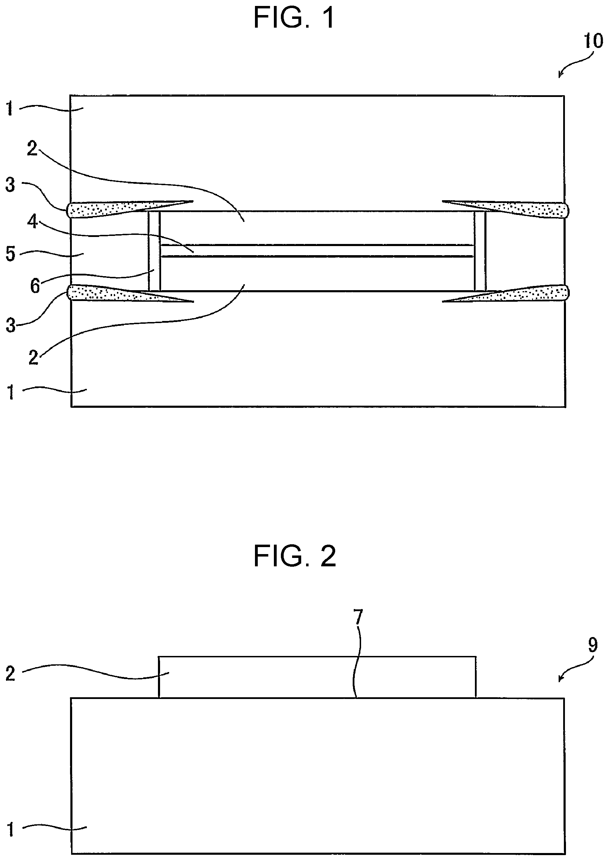

Fig. 1 is a cross-sectional view schematically showing the slab assembly according to the present invention. The slab assembly 10 according to the present invention includes: clad raw workpieces 9 (see Fig. 2) each including a base metal plate 1 and a cladding plate 2 stacked together; a release material 4; and a spacer 5. These members are disposed as shown in Fig. 1. Steel plates are used for the base metal plates 1. In the present invention, no particular limitation is imposed on the components of the steel plates. No particular limitation is imposed on the components of the cladding plates 2, and steel plates (such as stainless steel plates) or any of various metal plates such as nonferrous metal plates (such as titanium plates) can be used.

As shown in Fig. 2, each clad raw workpiece 9 includes a base metal plate 1 and a cladding plate 2 stacked together. The lengths of the four sides of the cladding plate 2 are shorter than those of the base metal plate 1, and the base metal plate 1 is exposed around the contact surface 7 between the base metal plate 1 and the cladding plate 2.

The surface of the base metal plate 1 and the surface of the cladding plate 2 are cleaned to remove foreign substances and stains in advance and then stacked together. By stacking the base metal plate 1 and the cladding plate 2 after cleaning, the base metal plate 1 and the cladding plate 2 can be brought into tight contact with each other through welding and rolling steps described later. No particular limitation is imposed on the means for cleaning. Any previously known technique (such as pickling or polishing) may be used, and at least the surfaces that later form the contact surface 7 are cleaned.

Then two clad raw workpieces 9 are used to manufacture the slab assembly 10 shown in Fig. 1.

To manufacture the slab assembly 10, two clad raw workpieces 9 (see Fig. 2 for each of the clad raw workpieces 9) are disposed such that their cladding plates 2 face each other and the release material 4 is interposed between the cladding plates 2. The release material 4 is provided to allow the clad raw workpieces 9 to be separated from each other after rolling described later. No particular limitation is imposed on the component of the release material 4. For example, it is preferable to use a previously known silica-based binder (a so-called ceramic binder).

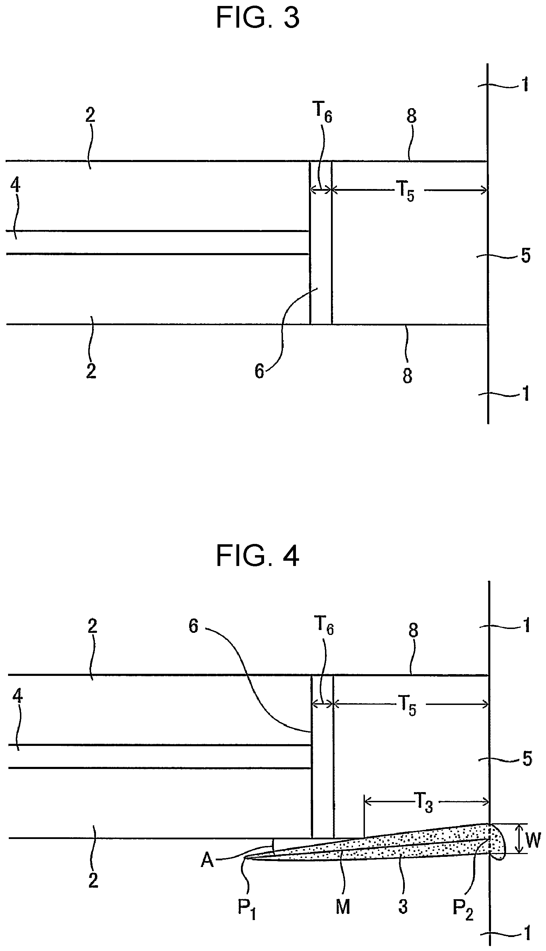

A spacer 5 having a thickness of $T_5$ (mm) is disposed along the four sides of the cladding plates. Specifically, the spacer 5 is brought into abutment against the base metal plates 1 exposed around the cladding plates 2. An example of the abutment is enlarged in Fig. 3. Fig. 3 shows the manner of the abutment of the spacer 5 on the right side in Fig. 1 against the base metal plates 1.

Preferably, the spacer 5 is disposed such that its outer circumferential surface and side surfaces of the base metal plates 1 form a single flat plane (i.e., no step is formed). The reason for this is to control the dimensions and angles of metal welds described later accurately. Preferably, a gap 6 is provided between the inner circumferential surface of the spacer 5 and side surfaces of the cladding plates 2 and the release material 4. The reason for this is to prevent the spacer 5 from being pushed out to the outer side of the side surfaces of the base metal plates 1 when the cladding plates 2 are thermally expanded during heating before the rolling described later. Specifically, the thickness $T_6$ of the gap 6 is preferably in the range of 8 to 12 mm.

Next, welding is performed along a surface 8 at which the spacer 5 and one of the base metal plates 1 abut against each other (this surface is hereinafter referred to as an abutting surface). An example of the welding is shown in Fig. 4.

The welding along the abutting surface 8 between the base metal plate 1 and the spacer 5 is performed using a laser beam welding method. The laser beam is not affected by the magnetic properties of the base metal plates 1, the cladding plates 2 and the spacer 5, and can be stably used for welding. Therefore, the dimensions and angle of a metal weld 3 can be controlled accurately.

The laser beam is applied in a vacuum atmosphere. If the laser beam is applied in a high-pressure atmosphere, adhesion of foreign substances and the occurrence of stains cannot be prevented. It is therefore preferable that the laser beam welding is performed in a vacuum atmosphere having a pressure of 0.1 kPa or less. More preferably, the pressure is 0.1 Pa or less. The laser beam is applied such that the deepest portion $P_1$ of the deep and narrow metal weld 3 formed by the laser beam welding is formed inside the base metal plate 1.

If the length $T_3$ (mm) of the joint region of the abutting surface 8 that is formed by the metal weld 3 (i.e., the region in which the abutting surface 8 is first melted and then formed to be the metal weld 3) exceeds the thickness $T_5$ of the spacer 5, the metal weld 3 penetrates through the spacer 5. In this case, spatters may be generated in the gap 6 during welding and may enter the gap between the base metal plate 1 and the cladding plate 2. Therefore, the adhesion between the base metal plate 1 and the cladding plate 2 may deteriorate. Moreover, a portion to be discarded in order to remove the metal weld 3 from the slab assembly 10 after the rolling described later becomes large, and the yield of the clad steel plates decreases. If the length $T_3$ is less than 50% of the thickness $T_5$, the spacer 5 may be separated from the base metal plate 1 during the rolling described later. In this case, the adhesion between the base metal plate 1 and the cladding plate 2 deteriorates, or the collapse of the slab assembly 10 occurs. Therefore, the length $T_3$ is within the range of 50% or more and less than 100% of the thickness $T_5$ (i.e., within the range satisfying formula (3) below).

$$0.5 \times T_5 \leq T_3 < T_5 \qquad (3)$$

More preferably, the length $T_3$ is within the range of formula (4) below. The reason for this is as follows. The larger the penetration depth, the higher the strength of the joint portion obtained. However, if the length $T_3$ is 0.9Ts or more, the penetration depth may become excessively large in some cases depending on variations in the gap, surface state, etc., and the metal weld may penetrate through the spacer.

$$0.6 \times T_5 \leq T3 < 0.9T_5 \qquad (4)$$

As shown in Fig. 4, the width of the metal weld 3 in a plane formed on the side surface of the base metal plate 1 and the outer circumferential surface of the spacer 5 is denoted by W (mm). The reinforcement of the metal weld 3 sags down due to the gravity, but W is the width of the metal weld 3 along a side surface of the base metal plate 1 (i.e., the surface flush with the outer circumferential surface of the spacer 5). The length of a straight line M connecting the center $P_2$ of the width W and the deepest portion $P_1$ of the metal weld 3 is denoted by D (mm). If the value of D/W is less than 5, the metal weld 3 bulges into a pear shape, and cracking tends to occur. Therefore, W and D must satisfy the following formula (1).

$$D/W \geq 5 \qquad (1)$$

Preferably, D/W is in the range of formula (5) below. The reason for this is as follows. When D/W is excessively large, input energy is wastefully used, and the effects appropriate for the energy are not expected. Moreover, the larger the width W, the more easily the welding can be performed.

$$10 \geq D/W \geq 5 \qquad (5)$$

If the angle A(°) between the abutting surface 8 and the straight line M is less than 1°, the length $T_3$ of

the joint region tends to exceed the thickness $T_5$ of the spacer 5, and it is difficult to form the joint region that satisfy formula (3) above. If the angle A exceeds 15°, it is difficult to form the joint region having a length $T_3$ reaching 50% of the thickness $T_5$. Therefore, the angle A must satisfy formula (2) below. Preferably, the angle A is in the range of formula (6) below. The angle A means the irradiation angle of the laser beam.

$$1 \leq A \leq 15 \qquad (2)$$

$$3 \leq A \leq 11 \qquad (6)$$

The laser beam used in the present invention is not affected by the magnetic properties of the base metal plates 1 and the cladding plates 2 and can be controlled precisely and, therefore, metal welds 3 satisfying formulas (1) to (3) can be formed.

The thus-obtained slab assembly 10 is subjected to warm rolling or hot rolling. Then the circumferential portions of the base metal plates 1 are cut and removed, and the spacer 5 and the metal welds 3 are removed. Then two clad steel plates separated from the release material 4 are obtained. No particular limitation is imposed on the technique for heating the slab assembly 10 before the warm rolling or the hot rolling and on the technique for rolling the slab assembly 10 after heating, and any previously known technique may be used.

EXAMPLES

In Inventive Example 1, two base metal plates (thickness 100 mm × width 1250 mm × length 2000 mm) equivalent to SM400, two cladding plates (thickness 20 mm × width 1000 mm × length 1700 mm) equivalent to SUS304, four spacers (thickness 40 mm × width 30 mm [= Ts], the length was adjusted according to the base metal plates) equivalent to SM400, and an alumina-based binder used as the release material were stacked as shown in Fig. 1 and housed in a vacuum container. The surfaces of the base metal plates and the cladding plates that were to form contact surfaces and the surfaces of the base metal plates and the spacers that were to form abutting surfaces were polished in advance using an electric sander to clean these surfaces.

Next, the vacuum chamber was evacuated to form a vacuum atmosphere having a pressure of 0.1 Pa, and laser beam welding was performed to produce a slab assembly. The laser power of the laser beam welding was 30 kW, and the welding speed was 0.5 m/min. The irradiation angle of the laser beam was 10°. The entire circumference of the four sides was welded under the above constant conditions.

To check the shapes of the metal welds in Inventive Example 1, cross sections of the metal welds in the slab assembly were etched with nitric acid and ob-

served. The length $T_3$ of the joint region was 25 mm (= $0.83T_5$), and the width W was 7.6 mm. The length D of the metal welds was 49.7 mm. Specifically, since $T_3 = 0.83T_5$ and D/W = 6.5, formulas (1) and (3) are satisfied. Since the angle A was 10°, formula (2) is satisfied.

Next, in Inventive Example 2, a slab assembly was produced under the same conditions as in Inventive Example 1, heated uniformly at 1250°C, and subjected to hot rolling. Then the circumferential portions of the base metal plates were cut and removed, and the spacers and the metal welds were removed. Then two clad steel plates separated from the release material were obtained. The thickness of the base metal plate in each clad steel plate was 20 mm, and the thickness of the cladding plate was 4 mm.

The entire contact surfaces between the base metal plates and the cladding plates in Inventive Example 2 were inspected using ultrasonic flaw inspection, and no flaw echoes were detected. The shear strength of the contact surfaces was 360 N/mm$^2$, and their adhesion was found to be good. As described above, no flaw echoes were found in the clad steel plates in the present invention, and the base metal plates and the cladding plates were well-bonded together. Therefore, the clad steel plates can be manufactured stably with a high yield.

In Comparative Examples, slab assemblies were produced under the condition of a laser beam irradiation angle of 0°. When the welding is performed using a laser beam irradiation angle of 0°, the optical system of a welding head may be damaged by the reflected laser beam or a jet of metal vapor. Therefore, the welding was performed with a lead angle of 10°. The other conditions were the same as the conditions in Inventive Example 1. Two slab assemblies were produced under the conditions in the Comparative Examples. One of the slab assemblies was cut without any treatment, and a cross section of a weld was observed (Comparative Example 1). The other slab assembly was subjected to hot rolling, and the state of bonding between the cladding plates and the base metal plates was checked (Comparative Example 2). In Comparative Example 1, a portion of a spacer cut for the cross-sectional observation was etched with nitric acid and observed. In Comparative Example 1, the entire boundary surfaces between the base metal plates and the spacer were welded, and the laser beam was found to penetrate through the spacer and be irradiated to the cladding plates. Therefore, a portion of the abutting surface joint by the metal weld was not controlled to be located within a region extending from the surface of the spacer to a position located at 50% or more and less than 100% of the thickness $T_5$ of the spacer. The angle A(°) between the straight line M connecting the center of the width W of each metal weld to its deepest portion and a corresponding abutting surface was 0°, and formula (2) was not satisfied. In Comparative Example 2, the slab assembly produced under the same conditions as in Inventive Example 1 was uniformly heated at 1250°C and subjected to hot rolling. The clad steel obtained was inspected by ultrasonic flow inspection. Many flaw echoes were detected in the circumferential portions of the product, and the yield was poor.

Reference Signs List

1 base metal plate
2 cladding plate
3 metal weld
4 release material
5 spacer
6 gap
7 contact surface
8 abutting surface
9 clad raw workpiece
10 slab assembly
$T_3$ length of joint region along abutting surface formed from metal weld
$T_5$ thickness of spacer
$T_6$ thickness of gap
W width of metal weld on a plane formed from side surfaces of base metal plates and outer circumferential surface of spacer
$P_1$ deepest portion of metal weld
$P_2$ center of width of metal weld
M straight line connecting center of width of metal weld and deepest portion of metal weld
A angle between abutting surface and straight line

**Claims**

1. A slab assembly (10) comprising:

    two clad raw workpieces (9), each clad raw workpiece including one base metal plate (1) having at least one cleaned surface and one cladding plate (2) stacked on the cleaned surface of the base metal plate and whose surface stacked on the cleaned surface of the base metal plate is cleaned, four sides of the cladding plate (2) being shorter than four sides of the base metal plate (1), the two clad raw workpieces (9) being disposed with the cladding plates (2) thereof facing each other;
    a release material (4) interposed between the cladding plates (2); and
    a spacer (5) disposed along the four sides of the cladding plates (2), further comprising
    metal welds (3) formed along abutting surfaces (8) between the spacer (5) and the base metal plates (1), the metal welds having respective deepest portions located inside the respective base metal plates;
    each of the abutting surfaces (8) having a portion in which corresponding one of the metal welds (3) forms a joint located in a region extending from a surface of the spacer (5) to a position located at 500 or more and less than 1000 of a thickness $T_5$ of the spacer; and
a width W, mm, of each of the metal welds (3) along a side surface of corresponding one of the base metal plates (1), a length D, mm, of a straight line M connecting a center of the width W of the each of the metal welds (3) and the deepest portion thereof, and an angle A, °, between the straight line M and corresponding one of the abutting surfaces (8) satisfy the following formulas [1] and [2]:

$$D/W \geq 5, \text{ and} \qquad [1]$$

$$1 \leq A \leq 15 \qquad [2].$$

2. A method for manufacturing a slab assembly (10), the method comprising:

    preparing two clad raw workpieces (9), each clad raw workpiece (9) including one base metal plate (1) having at least one cleaned surface and one cladding plate (2) stacked on the cleaned surface of the base metal plate (1) and whose surface stacked on the cleaned surface of the base metal plate (1) is cleaned, four sides of the cladding plate (2) being shorter than four sides of the base metal plate (1);
    disposing the two clad raw workpieces (9) such that the cladding plates (2) thereof face each other;
    disposing a release material (4) so as to be interposed between the cladding plates (2);
    disposing a spacer (5) along four sides of the cladding plates (2); and
    performing welding along abutting surfaces (8) between the spacer (5) and the base metal plates (1) using a laser beam welding method in a vacuum atmosphere having a pressure of 0.1 kPa or less,
    wherein the performing welding is controlled such that:

        metal welds (3) having respective deepest portions located inside respective one of the base metal plates (1) are formed;
        each of the abutting surfaces (8) has a portion in which corresponding one of the metal welds (3) forms a joint located within a region extending from a surface of the spacer (5) to a position located at 500 or more and less than 1000 of a thickness $T_5$ of the spacer (5); and
        a width W, mm, of each of the metal welds (3) along a side surface of corresponding one of the base metal plates (1), a length D, mm, of a straight line M connecting a center of the width W of the each of the metal welds (3) and the deepest portion thereof, and an angle A, °, between the straight line M and corresponding one of the abutting surfaces (8) satisfy the following formulas (1) and (2):

$$D/W \geq 5, \text{ and} \quad (1)$$

$$1 \leq A \leq 15 \quad (2).$$

3. A method for manufacturing clad steel plates, the method comprising:

subjecting the slab assembly (10) according to claim 1 to warm rolling or hot rolling;
removing the spacer (5); and
separating the clad raw workpieces (9) from the release material (4) to obtain two clad steel plates.

**Patentansprüche**

1. Brammenzusammensetzung (10), umfassend:

zwei plattierte Rohwerkstücke (9), wobei jedes plattierte Rohwerkstück eine Grundmetallplatte (1) aufweist, die mindestens eine gereinigte Fläche und eine auf der gereinigten Fläche der Grundmetallplatte gestapelte Plattierungsplatte (2) aufweist, deren auf der gereinigten Fläche der Grundmetallplatte gestapelte Fläche gereinigt ist, vier Seiten der Plattierungsplatte (2) kürzer als vier Seiten der Grundmetallplatte (1) sind und die zwei plattierten Rohwerkstücke (9) so angeordnet sind, dass deren Plattierungsplatten (2) einander zugewandt sind;
ein Trennmaterial (4), das zwischen den Plattierungsplatten (2) angeordnet ist; und
einen Abstandshalter (5), der entlang der vier Seiten der Plattierungsplatten (2) angeordnet ist,
ferner umfassend
Metallschweißnähte (3), die entlang Stoßflächen (8) zwischen dem Abstandshalter (5) und den Grundmetallplatten (1) gebildet sind, wobei die Metallschweißnähte jeweils tiefste Abschnitte innerhalb der jeweiligen Grundmetallplatten aufweisen;
wobei jede der Stoßflächen (8) einen Abschnitt aufweist, in dem eine entsprechende der Metallschweißnähte (3) eine Verbindung bildet, die sich in einer Region befindet, die sich von einer Fläche des Abstandshalters (5) zu einer Position erstreckt, die sich bei 50 % oder mehr und weniger als 100 % einer Dicke $T_5$ des Abstandshalters befindet; und
eine Breite W, mm, jeder der Metallschweißnähte (3) entlang einer Seitenfläche einer entsprechenden der Grundmetallplatten (1), eine Länge D, mm, einer geraden Linie M, die einen Mittelpunkt der Breite W jeder der Metallschweißnähte (3) und deren tiefsten Abschnitt verbindet, und ein Winkel A, °, zwischen der geraden Linie M und einer entsprechenden der Stoßflächen (8) die folgenden Formeln [1] und [2] erfüllen:

$$D/W \geq 5 \text{ und} \quad [1]$$

$$1 \leq A \leq 15 \quad [2].$$

2. Verfahren zur Herstellung einer Brammenzusammensetzung (10), wobei das Verfahren Folgendes umfasst:

Vorbereiten von zwei plattierten Rohwerkstücken (9), wobei jedes plattierte Rohwerkstück (9) eine Grundmetallplatte (1) aufweist, die mindestens eine gereinigte Fläche und eine auf der gereinigten Fläche der Grundmetallplatte (1) gestapelte Plattierungsplatte (2) aufweist, deren auf der gereinigten Fläche der Grundmetallplatte (1) gestapelte Fläche gereinigt ist, und vier Seiten der Plattierungsplatte (2) kürzer als vier Seiten der Grundmetallplatte (1) sind;
Anordnen der zwei plattierten Rohwerkstücke (9) derart, dass ihre Plattierungsplatten (2) einander zugewandt sind;
Anordnen eines Trennmaterials (4), sodass es zwischen den Plattierungsplatten (2) angeordnet ist;
Anordnen eines Abstandshalters (5) entlang vier Seiten der Plattierungsplatten (2); und
Durchführen von Schweißen entlang von Stoßflächen (8) zwischen dem Abstandshalter (5) und den Grundmetallplatten (1) unter Verwendung eines Laserstrahlschweißverfahrens in einer Vakuumatmosphäre, die einen Druck von 0,1 kPa oder weniger aufweist,
wobei das Durchführen des Schweißens derart gesteuert wird, dass:

Metallschweißnähte (3) gebildet werden, die jeweilige tiefste Abschnitte aufweisen, die sich innerhalb jeweils einer der Grundmetallplatten (1) befinden;
jede der Stoßflächen (8) einen Abschnitt aufweist, in dem eine entsprechende der Metallschweißnähte (3) eine Verbindung bildet, die sich innerhalb einer Region befindet, die sich von einer Fläche des Abstandshalters (5) zu einer Position erstreckt, die sich bei 50 % oder mehr und weniger als 100 % einer Dicke $T_5$ des Abstandshalters (5) befindet; und
eine Breite W, mm, jeder der Metallschweißnähte (3) entlang einer Seitenfläche einer entsprechenden der Grundmetallplatten (1), eine Länge D, mm, einer geraden Linie M, die einen Mittelpunkt der Breite W jeder der Metallschweißnähte (3) und deren tiefsten Abschnitt verbindet, und ein Winkel A, °, zwischen der geraden Linie M und einer entsprechenden der Stoßflächen (8) die folgenden Formeln (1) und (2) erfüllen:

$$D/W \geq 5 \text{ und } (1)$$

$$1 \leq A \leq 15 \ (2).$$

3. Verfahren zur Herstellung von plattierten Stahlplatten, wobei das Verfahren Folgendes umfasst:

Aussetzen der Brammenzusammensetzung (10) nach Anspruch 1 gegenüber Warmwalzen oder Heißwalzen;
Entfernen des Abstandshalters (5); und
Trennen der plattierten Rohwerkstücke (9) von dem Trennmaterial (4), um zwei plattierte Stahlplatten zu erlangen.

**Revendications**

1. Ensemble brame (10) comprenant :

deux pièces brutes plaquées (9), chaque pièce brute plaquée comportant une plaque métallique de base (1) ayant au moins une surface nettoyée et une plaque de placage (2) empilée sur la surface nettoyée de la plaque métallique de base et dont la surface empilée sur la surface nettoyée de la plaque métallique de base est nettoyée, quatre côtés de la plaque de placage (2) étant plus courts que quatre côtés de la plaque métallique de base (1), les deux pièces brutes plaquées (9) étant disposées avec leurs plaques de placage (2) se faisant face ;
un matériau de séparation (4) interposé entre les plaques de placage (2) ; et
une entretoise (5) disposée le long des quatre côtés des plaques de placage (2), comprenant également

des soudures métalliques (3) formées le long de surfaces de butée (8) entre l'entretoise (5) et les plaques métalliques de base (1), les soudures métalliques ayant des parties les plus profondes respectives situées à l'intérieur des plaques métalliques de base respectives ;
chacune des surfaces de butée (8) ayant une partie dans laquelle une soudure métallique correspondante des soudures métalliques (3) forme un joint situé dans une région se prolongeant d'une surface de l'entretoise (5) à une position située à 50 % ou plus et à moins de 100 % d'une épaisseur $T_5$ de l'entretoise et
une largeur W, en mm, de chacune des soudures métalliques (3) le long d'une surface latérale d'une plaque métallique de base correspondante des plaques métalliques de base (1), une longueur D, en mm, d'une ligne droite M reliant un centre de la largeur W de chacune des soudures métalliques (3) et la partie la plus profonde de celle-ci, et un angle A, en °, entre la ligne droite M et une surface de butée correspondante des surfaces de butée (8) satisfont aux formules suivantes [1] et [2] :

$$D/W \geq 5, \text{ et } [1]$$

$$1 \leq A \leq 15 \ [2].$$

2. Procédé de fabrication d'un ensemble brame (10), le procédé comprenant :

la préparation de deux pièces brutes plaquées (9), chaque pièce brute plaquée (9) comportant une plaque métallique de base (1) ayant au moins une surface nettoyée et une plaque de placage (2) empilée sur la surface nettoyée de la plaque métallique de base (1) et dont la surface empilée sur la surface nettoyée de la plaque métallique de base (1) est nettoyée, quatre côtés de la plaque de placage (2) étant plus courts que quatre côtés de la plaque métallique de base (1) ;
la disposition des deux pièces brutes plaquées (9) de telle sorte que leurs plaques de placage (2) se fassent face ;
la disposition d'un matériau de libération (4) de manière à être interposé entre les plaques de placage (2) ;
la disposition d'une entretoise (5) le long de quatre côtés des plaques de placage (2) ; et
la réalisation d'un soudage le long de surfaces de butée (8) entre l'entretoise (5) et les plaques métalliques de base (1) en utilisant un procédé de soudage par faisceau laser dans une atmosphère sous vide ayant une pression de 0,1 kPa ou moins,
dans lequel la réalisation de soudage est contrôlée de telle sorte que :

des soudures métalliques (3) ayant des parties les plus profondes respectives situées à l'intérieur d'une plaque métallique de base respective des plaques métalliques de base (1) sont formées ;

chacune des surfaces de butée (8) a une partie dans laquelle une soudure métallique correspondante des soudures métalliques (3) forme un joint situé dans une région se prolongeant d'une surface de l'entretoise (5) à une position située à 50 % ou plus et à moins de 100 % d'une épaisseur $T_5$ de l'entretoise (5) ; et

une largeur W, en mm, de chacune des soudures métalliques (3) le long d'une surface latérale d'une plaque métallique de base correspondante des plaques métalliques de base (1), une longueur D, en mm, d'une ligne droite M reliant un centre de la largeur W de chacune des soudures métalliques (3) et la partie la plus profonde de celle-ci, et un angle A, en °, entre la ligne droite M et une surface de butée correspondante des surfaces de butée (8) satisfont aux formules (1) et (2) suivantes :

$$D/W \geq 5, \; et \; (1)$$

$$1 \leq A \leq 15 \; (2).$$

3. Procédé de fabrication de plaques d'acier plaquées, le procédé comprenant :

la soumission de l'ensemble brame (10) selon la revendication 1 à un laminage à tiède ou à un laminage à chaud ;
le retrait de l'entretoise (5) ; et
la séparation des pièces brutes plaquées (9) du matériau de libération (4) pour obtenir deux plaques d'acier plaquées.

FIG. 1

FIG. 2

## FIG. 3

## FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62045485 A
- JP 2016150342 A
- JP H07241685 B